# EUROPEAN PATENT SPECIFICATION

(11) **EP 2 400 635 B1**
(45) Date of publication and mention of the grant of the patent: **09.01.2019**
(21) Application number: 10743875.6
(22) Date of filing: 23.02.2010
(51) Int. Cl.: B62D 5/04, H02K 3/28, H02K 3/52, H02K 3/18

(54) **STATOR, BUS BAR UNIT, MOTOR, AND POWER STEERING DEVICE**
STATOR, BUSSCHIENENEINHEIT, MOTOR UND SERVOLENKVORRICHTUNG
STATOR, UNITÉ DE BARRE OMNIBUS, MOTEUR ET DISPOSITIF DE DIRECTION ASSISTÉE

(30) Priority: 23.02.2009 JP 2009039159
(43) Date of publication of application: 28.12.2011
(73) Proprietor: Nidec Corporation, Kyoto-shi, Kyoto 601-8205 (JP)
(72) Inventor: AONO, Masato, Kyoto-shi Kyoto 601-8205 (JP); FUKUNAGA, Keisuke, Kyoto-shi Kyoto 601-8205 (JP); OTSUJI, Motofumi, Kyoto-shi Kyoto 601-8205 (JP)
(74) Representative: Zimmermann, Tankred Klaus
(86) International application number: PCT/JP2010/052756
(87) International publication number: WO 2010/095752

(56) References cited:
- WO-A1-2007/144753
- JP-A- 9 191 588
- JP-A- 2000 261 990
- JP-A- 2009 027 777
- US-A1- 2006 068 617
- US-A1- 2007 182 271

## Description

### Technical Field

The present invention relates to a stator, a bus bar unit, a motor, and a power steering device.

### Background Art

The pole number (a rotor's magnetic pole number) or the slot number (which corresponds to magnetic pole number on the stator's side), which is a basic constitution of a motor, is appropriately decided in accordance with the motor's specifications. Usually, a coil arrangement is designed for each combination of said number of poles or said number of slots.

For example, a 14 electrode-12 slot brushless motor which forms a rotating magnetic field by a three-phase coil group consisting of a U-phase, a V-phase and a W-phase is well known (Japanese Patent Application Publication No. 2006-50690). In the stator of this brushless motor, the coils of each phase are respectively constituted of four divided cores. Each divided core is arranged in a ring shape and fixed in order for the coil group of each phase to form a certain arrangement. Further, a conductive line derived from each coil group is generally connected by a bus bar unit provided in the motor.

US 2007/182271 A1 describes stator. In a state in which a first divisional core and a second divisional core are arranged in a state spaced from each other and adjacent to each other, a first coil and a second coil are each wound around a tooth. The first coil and the second coil are in the same phase. In a state in which a plurality of divisional cores are arranged annularly so that their teeth are oriented in a radially inward direction, the first divisional core and the second divisional core are not adjacent to each other in the circumferential direction. A plurality of connection wires are shaped to converge at an end surface of a stator core.

US 2006/068617 A1 describes a bus bar secured to a stator in an electric motor. The bus bar includes four wiring boards, which are arranged perpendicularly to a center axis at intervals in a direction toward the center axis, and a resin portion for covering the surroundings of the four wiring boards by injection molding.

### Summary of the Invention

Such constitution of a bus bar unit is decided in accordance with the constitution of a stator or the specification of a motor; however, the smallest and simplest structure is desirable.

It is an object of the present invention to provide a stator allowing for a miniaturized motor or to reduce the expenses used in the materials, a motor including the stator and a power steering device including the motor.

This object is achieved by the subject matter as defined in the independent claim.

The stator according to the present invention comprises a core and a coil group. The core has a ring part in a form of a ring, and a teeth part consisting of twelve elemental teeth parts. The coil group consists of twelve coils formed in each of the elemental teeth parts. The core is formed by coupling twelve elemental cores having an elemental teeth part. The coil group is constituted of six pairs of coils each consisting of two coils joined to each other by a single conductive line. When the core is divided into a phase region and a neutral region equally along the axial direction, one coils in the six pairs of coils are arranged in the phase region, and the other coils are arranged in the neutral region.

It is also proposed a motor comprising the stator and a bus bar unit which comprises a plurality of bus bars and an insulating holder where the plurality of bus bars is arranged. The holder has a bus bar supporting part in a form of a ring. The bus bar has a first bus bar approximately in a form of a semicircle and at least a second bus bar ∼ a fourth bus bar in a form of a minor arc. When the bus bar supporting part is divided into a phase region and a neutral region equally along the axial direction, the first bus bar is arranged in the neutral region, and a least the second bus bar ∼ the fourth bus bar are arranged in the phase region in an overlapping manner.

### Effect of the Invention

The present invention makes it possible to provide a miniaturized motor or to reduce the expenses used in the materials.

### Brief Description of the Diagrams

FIG. 1 is a schematic diagram of the power steering device according to a desirable embodiment of the invention.
FIG. 2 is a schematic sectional view of the motor's constitution according to a desirable embodiment of the invention.
FIG. 3 is a schematic perspective view of the stator according to a desirable embodiment of the invention.
FIG. 4 is a schematic diagram for illustrating the coil arrangement according to a desirable embodiment of the invention.
FIG. 5 is a diagram for illustrating the coil pair according to a desirable embodiment of the invention.
FIG. 6 is a wiring diagram of the stator according to a desirable embodiment of the invention.
FIG. 7 is a schematic perspective view of a bus bar unit of the motor according to a desirable embodiment of the invention.
FIG. 8 is a schematic perspective view of the bus bar according to a desirable embodiment of the invention.
FIG. 9 is a portion of a sectional view of FIG. 7. (a) is a sectional view of the X-X line, (b) is a sectional view of the Y-Y line.
FIG. 10 is schematic diagram for illustrating the wire connection between the stator and the bus bar.
FIG. 11 is a portion of a sectional view of a conventional bus bar unit.

### Description of the Reference Characters

| | |
|---|---|
| 1: stator | 2: core |
| 2a: elemental core | 4: coil |
| 21: ring part | 22: teeth part |
| 22a: elemental teeth part | 27: phase region |
| 28: neutral region | 40: coil pair |

### Best Mode for Carrying Out the Invention

Set forth below are detailed descriptions of a desirable embodiment for the present invention based on the diagrams. The descriptions below are substantially examples, and they do not necessarily imply any limitations on the present invention, where it is applied to or how it is used.

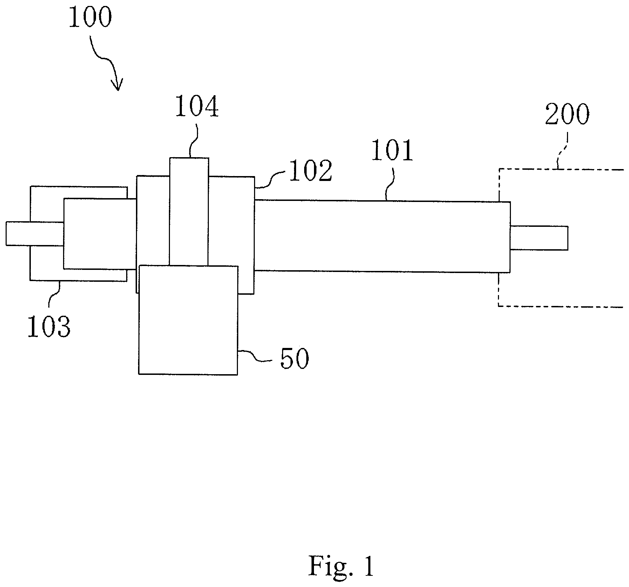

FIG. 1 is a schematic diagram of an electrically-powered power steering device (100). This power steering device (100) is used for assisting the operation of a handle (a steering wheel) in a vehicle such as an automobile. The power steering device (100) has a torque sensor (102) which detects the power applied to the handle through an shaft part (101) connected to a steering apparatus (200), a control unit (103) which calculates the necessary assist power based on the output from the torque sensor (102), a motor (50) which generates the rotative force based on the output from the control unit (103), and a reduction mechanism (104) which reduces the rotative force of the motor (50) and delivers the same to the steering apparatus (200).

In a vehicle loaded with the power steering device (100), the motor (50) of the power steering device (100) is operated by the power applied to the handle, and the rotation of the handle is assisted by the rotative force of the motor (50), which makes it possible to operate the handle with a small amount of force.

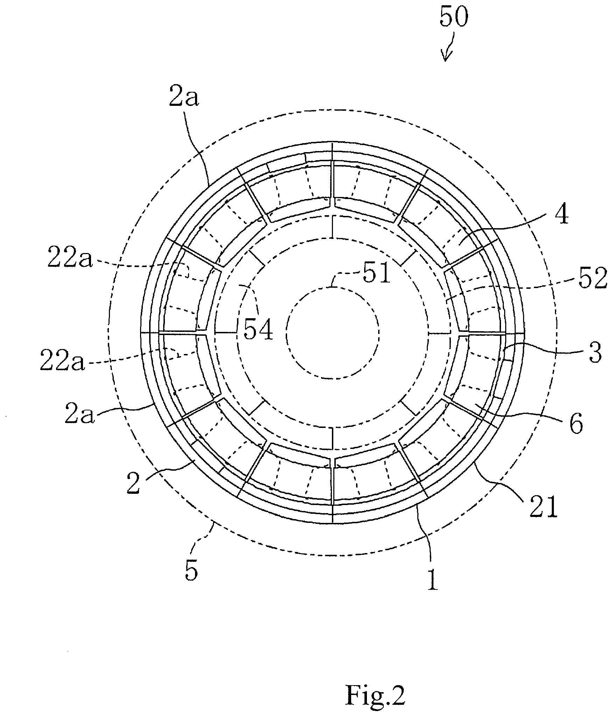

FIG. 2 is a schematic diagram of a section of the motor (50). The motor (50) is a so called inner-rotor type motor configured with 8 poles and 12 slots. The motor (50) comprises a shaft (51), a rotor (52), a stator (1), a bus bar unit (30), and a motor housing (5).

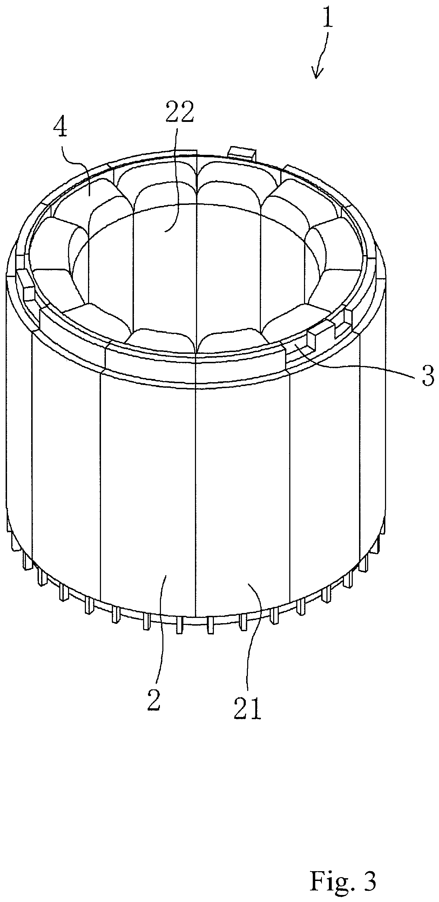

Specifically, the stator (1) approximately in a form of a cylinder is provided in the motor housing (5) as illustrated in FIG. 3. The rotor (52) approximately in a form of a cylinder is fixed around the circumference of the shaft (51) which is rotably supported to the motor housing (5). The outer circumference surface of the rotor (52) and the inner circumference surface of the stator (1) are facing each other with a slight gap therebetween. 8 magnets (54,...,54) (8 poles) are arranged in even intervals around the outer circumference of the rotor (52) so that the N-pole and the S-pole are arranged alternately.

The stator (1) comprises a core (2), an insulator (3), and a coil (4). The core (2) is formed by laminating sheets of steel. The core (2) has a ring part (21) in a form of a ring and a teeth part (22). The teeth part (22) consists of twelve elemental teeth parts (22a,...,22a) projecting from the inside of the ring part (21) toward the center thereof. A conductive line is winded around each elemental teeth part (22a) through the insulator (3), and the coil (4) is formed by so called concentrated winding. That is, a coil group consisting of twelve coils (4,...,4) is formed in the teeth part (22). Further, a conductive line is accommodated within the twelve spaces (slots) (6,...,6) between the adjacent elemental teeth parts (22a) (12 slots).

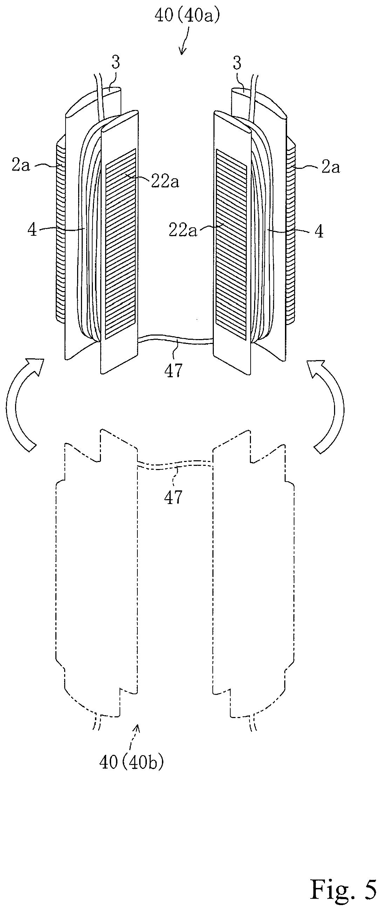

The core (2) is formed by coupling the twelve elemental cores (2a,...,2a). Each elemental core (2a) is extended to the axial direction and has an external form with an approximately T-shaped section, and each elemental core has an elemental teeth part (22a) (see FIG. 5). A conductive line is winded to every two elemental teeth parts (22a) to form total six pairs of coils (40,...,40). Specifically, a coil pair (40) connecting two coils (4,4) is formed by consecutively winding a conductive line to each elemental teeth part (22a,22a) with respect to unconnected two elemental cores (2a,2a).

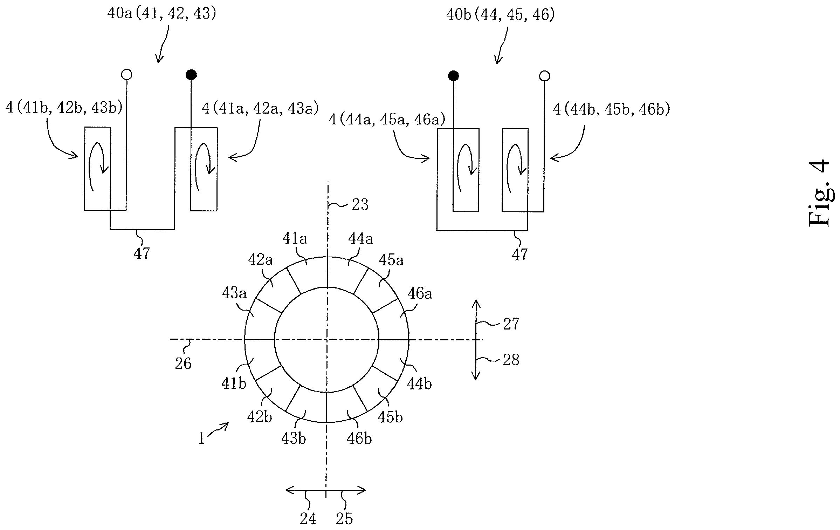

As illustrated in FIG. 4, the winding direction of the two coils (4,4) in each coil pair (40) is arranged in the same direction when viewed from a front end side of the elemental teeth part (22a). In the present embodiment, the winding direction of the two coils (4,4) in each coil pair (40) is arranged in a clockwise direction; however, a counter clockwise direction is also applicable.

The coil pair (40) consists of two types of coil pairs (40a,40b) where the winding directions of conductive line are different. As illustrated in the left side of FIG. 4, for example, the coil pair (40a) comprises a first coil pair ∼ a third coil pair (41,42,43) where the winding of the two coils (4,4) starts from the left coil (4) and ends at the right coil (4). As also illustrated in the right side of FIG. 4, the coil pair (40b) comprises a fourth coil pair ∼ a sixth coil pair (44,45,46) where the winding starts from the right coil (4) and ends at the left coil (4).

Specifically, the winding in the first coil pair ∼ the third coil pair (41,42,43) respectively starts from their left coils (41b,42b,43b) and ends at the right coils (41a,42a,43a). The winding in the fourth coil pair ∼ the sixth coil pair (44,45,46) starts from their right coils (44b,45b,46b) and ends at the left coils (44a,45a,46a). Further in FIG. 4, the white circle illustrates a starting end of winding, and the black circle illustrates a finishing end of winding.

The two types of coil pairs (40a,40b) where the winding directions of conductive line are different can be easily formed, for example, by using the method illustrated in FIG. 5. That is, one coil pair [40a(40b)] can be formed by bending the coil pair (40) winded in the same direction as the other coil pair [40b(40a)] in an opposite direction at its jumper wire (47) portion and then changing the left and right of each elemental core (2a). Thus, it is desirable to form one coil pair [40a(40b)] first, and then form the other coil pair [40b(40a)] by bending the necessary portion of the coil pair [40a(40b)] for connecting each elemental core (2a), which provides excellent work efficiency. Each coil pair (40) is installed in a predetermined arrangement so that the motor efficiency is performed suitably for the power steering device (100).

As illustrated in FIG. 4, for example, when the core (2) is viewed in its axial direction and virtually divided by a first compartment line (23) into a first region (24) and a second region (25), the first coil pair ∼ the third coil pair (41,42,43) are arranged in the first region (24), and the fourth coil pair ∼ the sixth coil pair (44,45,46) is arranged in the second region (25).

Also, for example, the coil (42a) of the second coil pair (42) and the coil (43a) of the third coil pair (43) are arranged to be placed between the two coils (41a,41b) of the first coil pair (41). That is, in the first region (24) [or the second region (25)], one coils (4) respectively from another two coil pairs (40) are arranged between the two coils (4,4) of one coil pair (40).

Further, the winding direction of each coil pair (40) is arranged in a symmetrical form with respect to the first compartment line (23) in the first region (24) and the second region (25).

Specifically, in the first region (24), the coil (41a), the coil (42a), the coil (43a), the coil (41b), the coil (42b), the coil (43b) are arranged in a counter clockwise direction in said order. In the second region (25), the coil (44a), the coil (45a), the coil (46a), the coil (44b), the coil (45b), the coil (46b) are arranged in a clockwise direction in said order.

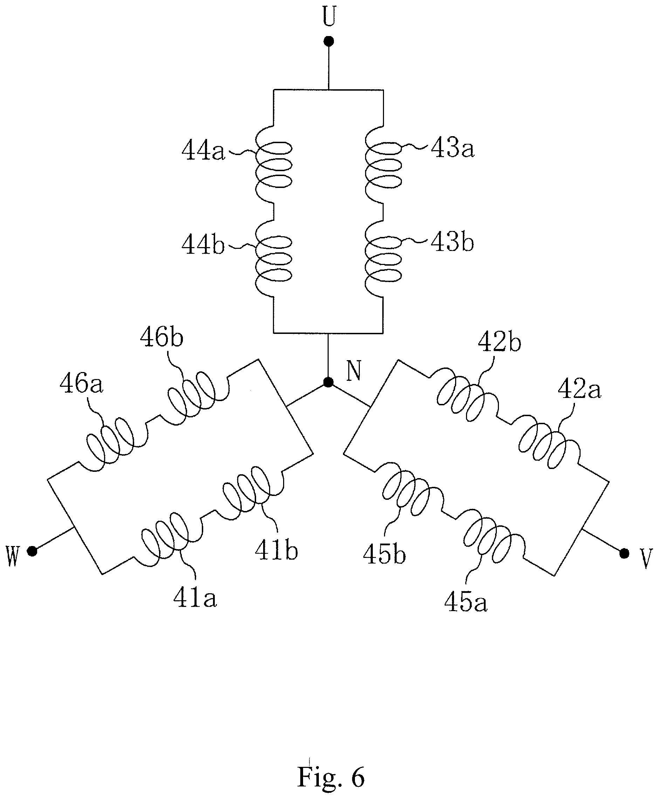

Such arrangement makes it possible to form a star connection which corresponds to the U-phase, V-phase, W-phase illustrated in FIG. 6. At this time, when the core (2) is divided by a second compartment line (26) perpendicular to the first compartment line (23) into a phase region and a neutral region equally along the axial direction, one coils (41a,...,46a) of the first coil pair ∼ the sixth coil pair (41,...,46) are arranged in the phase region (27), and the other coils (41b,...,46b) are arranged in the neutral region (28). Accordingly, the conductive lines derived from the neutral region (28) can all be connected to a neutral point (N).

As it will be explained later, such arrangement makes it possible to simplify the wire connection between the stator (1) and the bus bar unit (30), and therefore provides excellent work efficiency. Further, it is also possible to miniaturize the bus bar unit (30) or the bus bar (32), and therefore reduce the expenses used in the materials.

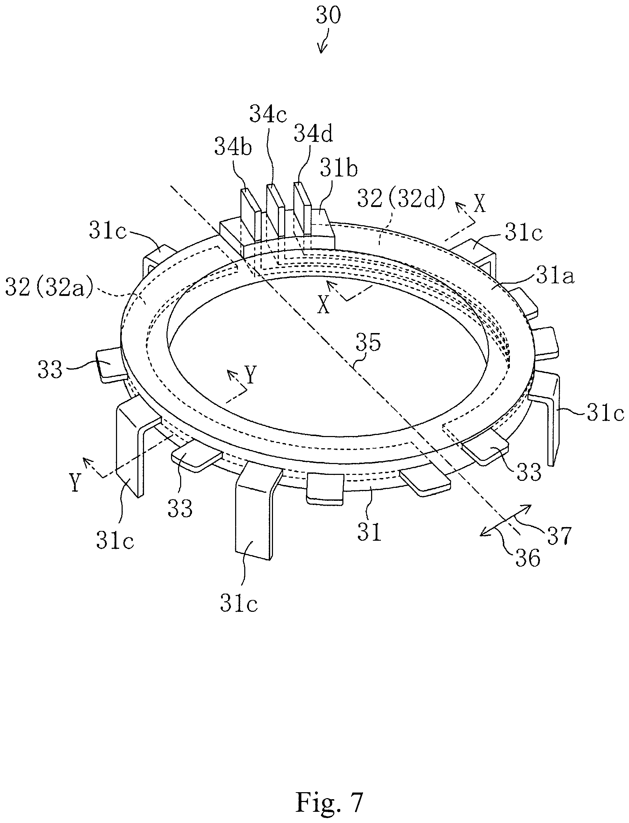

As illustrated in FIG. 7, the bus bar unit (30) consists of a plurality of bus bars (32) and a holder (31). The holder (31) is an injection molded article made by an insulating resin such as polybutylenetelephthalate (PBT) including fiber. The holder (31) comprises a bus bar supporting part (31a) in a form of a ring, a connector part (31b) formed integrally with the bus bar supporting part (31a), and a plurality of supporting leg parts (31c,...,31c) for attaching to the motor housing (5).

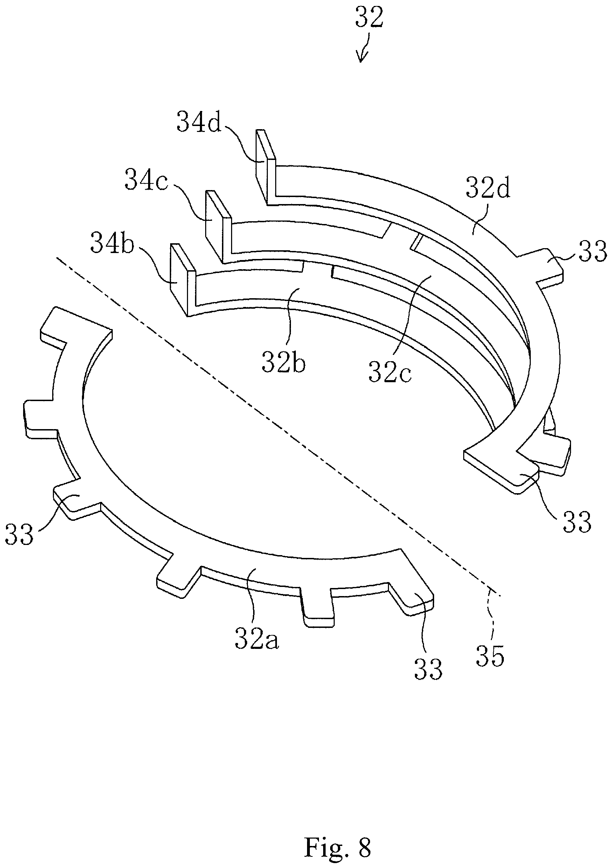

The bus bar (32) is a press processed article of a metal plate with excellent conductivity, such as copper. Each bus bar (32) is formed integrally with the holder (31) by a method so called insert molding. As illustrated in FIG. 8, the bus bar (32) of the present embodiment is extended to the circumferential direction in a strip form and comprises a first bus bar (32a) in an approximate semicircle, and a second bus bar ∼ a fourth bus bar (32b,32c,32d) which is respectively in a form of a minor arc having different lengths. A plurality of connecting terminals (33,33,...) is formed to protrude from the outer circumference of each bus bar (32). The conductive line derived from the stator (1) is connected to these connecting terminals (33,33,...). A second ∼ fourth connector terminals (34b,34c,34d) standing approximately perpendicularly are formed integrally at the end of each of the second bus bar ∼ the fourth bus bar (32b,32c,32d). The front end of the second ∼ fourth connector terminals (34b,34c,34d) are protruded from the connector part (31b) of each holder (31).

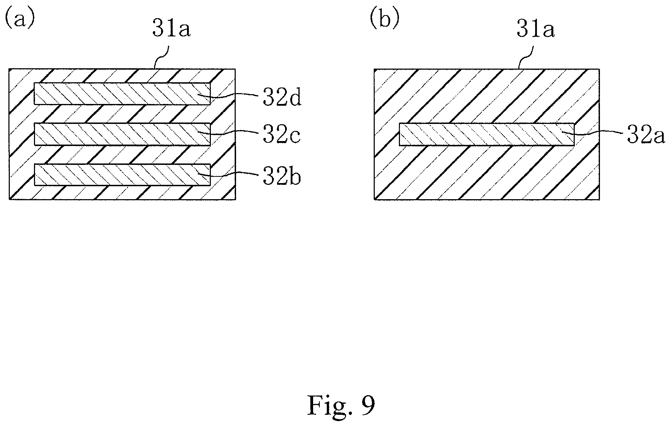

Each bus bar (32) is embedded in the bus bar supporting part (31a) so as not to contact with each other. Specifically, for example, when the bus bar supporting part (31a) is divided into a phase side region (37) and a neutral side region (36) by a bisectrix (35) equally along the axial direction, the first bus bar (32a) is arranged in the neutral side region (36) and the second bus bar ∼ the fourth bus bar (32b,32c,32d) are arranged in the phase side region (37). As illustrated in FIG. 9(a), in the phase side region (37), the second bus bar ∼ the fourth bus bar are arranged to overlap with each other with a resin layer therebetween. Meanwhile, as illustrated in FIG. 9(b), only the first bus bar (32a) is arranged in the neutral side region (36).

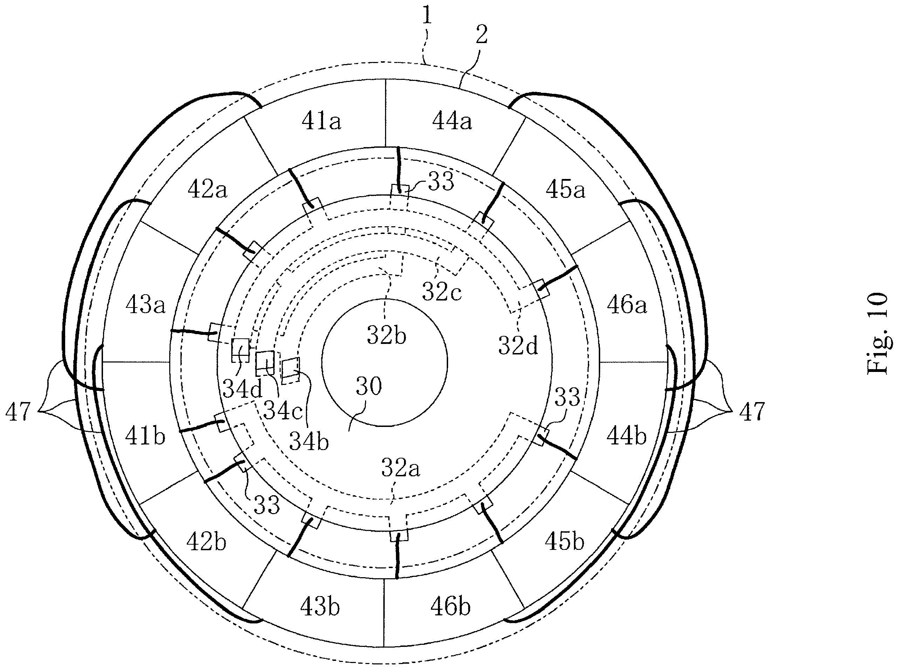

As illustrated in FIG. 10, the bus bar unit (30) is connected to the stator (1). That is, the neutral side region (36) of the bus bar unit (30) is arranged correspondingly to the neutral region (28) of the stator (1), and the phase side region (37) of the bus bar unit (30) is arranged correspondingly to the phase region (27) of the stator (1). Further, the conductive line derived from the neutral region (28) of the stator (1), specifically, the conductive line derived from the coil (41b), the coil (42b), the coil (43b), the coil (44b), the coil (45b), the coil (46b) is connected to each of the connecting terminals (33,...,33) of the first bus bar (32a).

The conductive line derived from the phase region (27) of the stator (1) is connected to certain connecting terminals (33,...,33) of the second bus bar ∼ the fourth bus bar (32b,32c,32d). Specifically, the conductive lines derived from the coil (43a) and the coil (44a) are connected to each of the connecting terminals (33,33) of the second bus bar (32b). The conductive lines derived from the coil (42a) and the coil (45a) are connected to each of the connecting terminals (33,33) of the third bus bar (32c). The conductive lines derived from the coil (41a) and the coil (46a) are connected to each of the connecting terminals (33,33) of the fourth bus bar (32d). With such arrangements, a neutral point (N) is formed by the first bus bar (32a), and a star connection illustrated in FIG. 6 is formed by each of the contact points (U,V,W) which are formed by the second bus bar ∼ the fourth bus bar (32b,32c,32d).

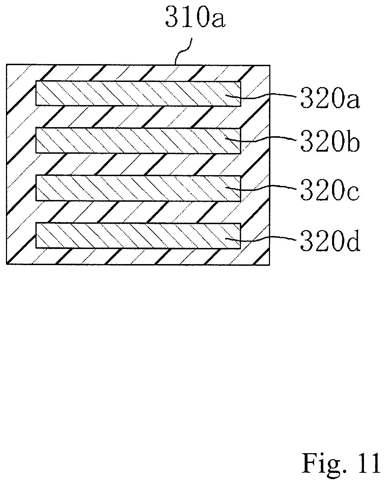

FIG. 11 illustrates an example of a conventional bus bar unit. When the conductive line connected to the neutral point is spread out widely around the circumference of the stator, it is common for the bus bar for the neutral point is shaped in the forms of a ring or a major arc in order to prevent the conductive line from crawling about.

However, such arrangement makes the thickness of the bus bar supporting part (310a) thicker because the four bus bars (320a,320b,320c,320d) would be overlapped as shown in the bus bar unit illustrated in FIG. 11. Regarding such problem, the bus bar unit (30) of the present embodiment provides the first bus bar (32a) for the neutral point in a form of an approximate semicircle, and the second bus bar ∼ the fourth bus bar (32b,32c,32d) for a contact points of each phase in a form of a minor arc and arranges them respectively in the neutral side region (36) and the phase side region (37) of the bus bar unit (30), which makes it possible to decrease the thickness of the bus bar supporting part and therefore enables the miniaturization of the bus bar unit (30). This also provides easy wire connection with the stator (1) and improves work efficiency.

## Claims

1. A stator (1) comprising:
a ring part (21) in a form of a ring;
a core (2) having a teeth part (22) which consists of twelve elemental teeth parts (22a) projecting from the inside of the ring part (21) toward a center thereof; and
a coil group which consists of twelve coils (4) formed in each of the elemental teeth parts (22a), wherein
the core (2) is formed by coupling twelve elemental cores which respectively have one elemental teeth part (22a);
the coil group is constituted of six coil pairs (41-46) consisting of two of the twelve coils (4) joined to each other by a conductive line;
when viewed along the axial direction, the core (2) is equally divided by a second compartment line into a phase region (27) and a neutral region (28), the one coil (41a-46a) in each of the six coil pairs (41-46) being arranged in the phase region (27), and the other coil (41b-46b) being arranged in the neutral region (28);
each of the coil pairs (41-46) is connected in a star connection;
all of the conductive lines derived from the neutral region (28) are connected to a neutral point;
winding directions of the two coils (41a-46a, 41b-46b) in each of the coil pairs (41-46) are arranged in the same direction when viewed from a front end side of the elemental teeth part (22a); and
the coil pairs (41-46) comprise a first coil pair (41), a second coil pair (42) and a third coil pair (43) where the winding of each of these coil pairs (41-43) starts from the other coil (41b-43b) and ends at the one coil (41a-43a), **characterized in that**
the coil pairs (41-46) comprise a fourth coil pair (44), a fifth coil pair (45) and a sixth coil pair (46) where the winding of each of these coil pairs (44-46) starts from the other coil (44b-46b) and ends at the one coil (44a-46a); and
when viewed along the axial direction, the core (2) is equally divided by a first compartment line (23) perpendicular to the second compartment line into a first region (24) and a second region (25), the first coil pair (41), the second coil pair (42) and the third coil pair (43) being arranged in the first region (24), and the fourth coil pair (44), the fifth coil pair (45) and the sixth coil pair (46) being arranged in the second region (25).

2. A motor (50), comprising:
the stator (1) according to Claim 1; and
a bus bar unit (30) comprising:
a plurality of bus bars (32); and
an insulating holder (31) where the plurality of bus bars (32) are arranged, wherein
the holder (31) has a bus bar supporting part (31a) in a form of a ring;
the bus bar (32) comprises a first bus bar (32a) and at least a second bus bar (32b), a third bus bar (32c) and a fourth bus bar (32d),
wherein the first bus bar (32a) is in a form of an approximate semicircle and the second bus bar (32b), the third bus bar (32c) and the fourth bus bar (32d) are in a form of a minor arc; and
wherein, when viewed along an axial direction of the bus bar supporting part (31a), the bus bar supporting part (31a) is equally divided into a phase side region (37) and a neutral side region (36), the first bus bar (32a) being arranged only in the neutral side region (36), and the second bus bar (32b), the third bus bar (32c) and the fourth bus bar (32d) being arranged in the phase side region (37) to overlap with each other.

3. The motor (50) according to Claim 2, wherein the first bus bar (32a) is used for a star connection connected to a neutral point.

4. A motor (50) comprising the stator (1) according to Claim 1.

5. The motor (50) according to Claim 4, further comprising a rotor configured with 8 magnetic poles.

6. A power steering device (100) comprising the motor (50) according to any one of Claims 2 to 5.

## Patentansprüche

1. Ein Stator (1), der folgende Merkmale aufweist:
ein Ringteil (21) in einer Form eines Rings;
einen Kern (2) mit einem Zahnteil (22), das aus zwölf Grundzahnteilen (22a) besteht, die von der Innenseite des Ringteils (21) zu einer Mitte desselben vorstehen; und
eine Spulengruppe, die aus zwölf Spulen (4) besteht, die in jedem der Grundzahnteile (22a) gebildet sind, wobei
der Kern (2) gebildet wird durch Koppeln von zwölf Grundkernen, die jeweils ein Grundzahnteil (22a) aufweisen;
die Spulengruppe aus sechs Spulenpaaren (41-46) zusammengesetzt ist, die aus zwei der zwölf Spulen (4) bestehen, die durch eine leitfähige Leitung miteinander verbunden sind;
entlang der Axialrichtung gesehen, der Kern (2) durch eine zweite Unterteilungsleitung gleichmäßig unterteilt ist in eine Phasenregion (27) und eine neutrale Region (28), wobei die eine Spule (41a-46a) in jedem der sechs Spulenpaare (41-46) in der Phasenregion (27) angeordnet ist und die andere Spule (41b-46b) in der neutralen Region (28) angeordnet ist;
jedes der Spulenpaare (41-46) in einer Sternverbindung (46) verbunden ist;
alle leitfähigen Leitungen, die von der neutralen Region (28) abgeleitet werden, mit einem Neutralpunkt verbunden sind;
Wicklungsrichtungen der zwei Spulen (41a-46a, 41b-46b) in jedem der Spulenpaare (41-46) von einer vorderen Endseite des Grundelementteils (22a) gesehen in der gleichen Richtung angeordnet sind; und
die Spulenpaare (41-46) ein erstes Spulenpaar (41), ein zweites Spulenpaar (42) und ein drittes Spulenpaar (43) aufweisen, wo die Wicklung von jedem dieser Spulenpaare (41-43) von der anderen Spule (41b-43b) beginnt und an der einen Spule (41a-43a) endet, **dadurch gekennzeichnet, dass** die Spulenpaare (41-46) ein viertes Spulenpaar (44), ein fünftes Spulenpaar (45) und ein sechstes Spulenpaar (46) aufweisen, wo die Wicklung von jedem dieser Spulenpaare (44-46) von der anderen Spule (44b-46b) beginnt und an der einen Spule (44a-46a) endet; und
entlang der Axialrichtung gesehen, der Kern (2) durch eine erste Unterteilungsleitung (23) senkrecht zu der zweiten Unterteilungsleitung gleichmäßig unterteilt ist in eine erste Region (24) und eine zweite Region (25), wobei das erste Spulenpaar (41), das zweite Spulenpaar (42) und das dritte Spulenpaar (43) in der ersten Region (24) angeordnet sind und das vierte Spulenpaar (44), das fünfte Spulenpaar (45) und das sechste Spulenpaar (46) in der zweiten Region (25) angeordnet sind.

2. Ein Motor (50), der folgende Merkmale aufweist:
den Stator (1) gemäß Anspruch 1; und
eine Sammelschieneneinheit (30), die folgende Merkmale aufweist:
eine Mehrzahl von Sammelschienen (32); und
einen isolierenden Halter (31), wo die Mehrzahl von Sammelschienen (32) angeordnet sind, wobei
der Halter (31) ein Sammelschienentrageteil (31a) in einer Form eines Rings aufweist;
die Sammelschiene (32) eine erste Sammelschiene (32a) und zumindest eine zweite Sammelschiene (32b), eine dritte Sammelschiene (32c) und eine vierte Sammelschiene (32d) aufweist,
wobei die erste Sammelschiene (32a) eine Form eines ungefähren Halbkreises aufweist und die zweite Sammelschiene (32b), die dritte Sammelschiene (32c) und die vierte Sammelschiene (32d) eine Form eines kleinen Bogens aufweisen; und
wobei entlang einer Axialrichtung des Sammelschienenteils (31a) gesehen das Sammelschienentrageteil (31a) gleichmäßig unterteilt ist in eine Phasenseitenregion (37) und eine neutrale Seitenregion (36), wobei die erste Sammelschiene (32a) nur in der neutralen Seitenregion (36) angeordnet ist und die zweite Sammelschiene (32b), die dritte Sammelschiene (32c) und die vierte Sammelschiene (32d) in der Phasenseitenregion (37) angeordnet sind, um einander zu überlappen.

3. Der Motor (50) gemäß Anspruch 2, bei dem die erste Sammelschiene (32a) für eine Sternverbindung verwendet wird, die mit einem Neutralpunkt verbunden ist.

4. Ein Motor (50), der den Stator (1) gemäß Anspruch 1 aufweist.

5. Der Motor (50) gemäß Anspruch 4, der ferner einen Rotor aufweist, der mit acht Magnetpolen ausgebildet ist.

6. Eine Servolenkvorrichtung (100), die den Motor (50) gemäß einem der Ansprüche 2 bis 5 aufweist.

## Revendications

1. Stator (1), comprenant:
une partie de bague (21) en forme de bague;
un noyau (2) présentant une partie de dents (22) qui est composée de douze parties de dent élémentaire (22a) ressortant de l'intérieur de la partie de bague (21) vers le centre de cette dernière; et
un groupe de bobines composé de douze bobines (4) formées dans chacune des parties de dent élémentaire (22a),
dans lequel
le noyau (2) est formé en couplant douze noyaux élémentaires qui présentent, chacun, une partie de dent élémentaire (22a);
le groupe de bobines est composé de six paires de bobines (41 à 46) composées de deux des douze bobines (4) unies l'une à l'autre par une ligne conductrice;
lorsque vu dans la direction axiale, le noyau (2) est divisé de manière égale par une deuxième ligne de division en compartiments en une région de phase (27) et une région neutre (28), l'une bobine (41a à 46a) dans chacune des six paires de bobines (41 à 46) étant disposée dans la région de phase (27) et l'autre bobine (41b à 46b) étant disposée dans la région neutre (28);
chacune des paires de bobines (41 à 46) est connectée en étoile;
toutes les lignes conductrices dérivées de la région neutre (28) sont connectées à un point neutre;
les directions d'enroulement des deux bobines (41a à 46a, 41b à 46b) dans chacune des paires de bobines (41 à 46) sont disposées dans la même direction lorsque vues d'un côté d'extrémité avant de la partie de dent élémentaire (22a); et
les paires de bobines (41 à 46) comprennent une première paire de bobines (41), une deuxième paire de bobines (42) et une troisième paire de bobines (43), où l'enroulement de chacune de ces paires de bobines (41 à 43) commence à partir de l'autre bobine (41b à 43b) et se termine à l'une bobine (41a à 43a),
**caractérisé par le fait que** les paires de bobines (41 à 46) comprennent une quatrième paire de bobines (44), une cinquième paire de bobines (45) et une sixième bobine paire (46), où l'enroulement de chacune de ces paires de bobines (44 à 46) commence à partir de l'autre bobine (44b à 46b) et se termine à l'une bobine (44a à 46a); et
lorsque vu dans la direction axiale, le noyau (2) est divisé de manière égale par une première ligne de division en compartiments (23) perpendiculaire à la deuxième ligne de division en compartiments en une première région (24) et une deuxième région (25), la première paire de bobines (41), la deuxième paire de bobines (42) et la troisième paire de bobines (43) étant disposées dans la première région (24) et la quatrième paire de bobines (44), la cinquième paire de bobines (45) et la sixième paire de bobines (46) étant disposées dans la deuxième région (25).

2. Moteur (50), comprenant:
le stator (1) selon la revendication 1; et
une unité de barres omnibus (30) comprenant:
une pluralité de barres omnibus (32); et
un support isolant (31) dans lequel sont disposées la pluralité de barres omnibus (32), dans lequel le support (31) présente une partie de support de barre omnibus (31a) en forme de bague;
la barre omnibus (32) comprend une première barre omnibus (32a) et au moins une deuxième barre omnibus (32b), une troisième barre omnibus (32c) et une quatrième barre omnibus (32d),
dans lequel la première barre omnibus (32a) est en forme d'un demi-cercle approximatif et la deuxième barre omnibus (32b), la troisième barre omnibus (32c) et la quatrième barre omnibus (32d) sont en forme d'un arc mineur; et
dans lequel, lorsque vue dans une direction axiale de la partie (31a) de support de barre omnibus, la partie (31a) de support de barre omnibus est divisée de manière égale en une région du côté de phase (37) et une région du côté neutre (36), la première barre omnibus (32a) étant disposée uniquement dans la région du côté neutre (36), et la deuxième barre omnibus (32b), la troisième barre omnibus (32c) et la quatrième barre omnibus (32d) étant disposées dans la région du côté de phase (37) de manière à venir en recouvrement l'une avec l'autre.

3. Moteur (50) selon la revendication 2, dans lequel la première barre omnibus (32a) est utilisée pour une connexion en étoile connectée à un point neutre.

4. Moteur (50) comprenant le stator (1) selon la revendication 1.

5. Moteur (50) selon la revendication 4, comprenant par ailleurs un rotor configuré avec 8 pôles magnétiques.

6. Dispositif de direction assistée (100) comprenant le moteur (50) selon l'une quelconque des revendications 2 à 5.
